# EUROPEAN PATENT APPLICATION

(11) **EP 4 847 234 A1**
(43) Date of publication of application: **02.12.2026**
(21) Application number: 24920564.2
(22) Date of filing: 25.11.2024
(51) Int. Cl.: B29C 64/314, C09K 19/38, C09K 19/54, C09K 19/02, D01F 9/00, B29C 64/321, B29C 64/106, B29C 35/08, B29C 48/00, B29C 48/05

(54) **LIQUID CRYSTAL ELASTOMER, LIQUID CRYSTAL ELASTOMER FIBER COMPRISING SAME, AND MANUFACTURING METHOD THEREOF**

(30) Priority: 24.01.2024 KR 20240010773
(71) Applicant: Pusan National University Industry-University Cooperation Foundation, Busan 46241 (KR)
(72) Inventor: AHN, Suk Kyun, Busan 46241 (KR); LEE, Jin Hyeong, Busan 46241 (KR); OH, Seung Joon, Busan 46241 (KR)
(74) Representative: Gulde & Partner
(86) International application number: PCT/KR2024/018772
(87) International publication number: WO 2025/159313

(57) **Abstract**

The present invention relates to a method for controlling the driving direction and physical properties of a liquid crystal elastomer fiber and, more specifically, to a method for manufacturing a liquid crystal elastomer fiber in which the degree of contraction and expansion can be controlled according to the extrusion temperature and other conditions.

## Description

### Technical Field

The present invention relates to a liquid crystal elastomer and a liquid crystal elastomer fiber comprising the same, and specifically, to a liquid crystal elastomer and a liquid crystal elastomer fiber, which the property of expanding when heated.

### Background Art

Macroscopically aligned liquid crystal elastomers (LCEs) are soft actuating materials capable of programmable and reversible shape changes in response to external stimuli. Macroscopic shape changes, including shrinkage and elongation upon heating and cooling, respectively, may be induced by various means, including direct or indirect heating as well as other stimuli such as light and chemicals.

Recently, liquid crystal elastomer fibers have attracted attention due to their advantages, such as being similar to the human body's muscles, enabling flexible designs for complex actuation, and having a large surface area that enables fast response. All liquid crystal elastomer fibers reported in the literature to date undergo contraction upon heating when heated above the isotropization temperature (Tᵢ) due to mesogen alignment along the fiber axis.

Despite the significant potential for these materials to be commercialized in various industrial fields, current liquid crystal elastomer fibers undergo only contraction along the fiber axis when heated. In order to improve the practicality and functionality of liquid crystal elastomer fibers, it is necessary to develop liquid crystal elastomer fibers capable of actuating in a more diverse manner.

### DISCLOSURE

### Technical Problem

The present invention has been made in order to solve the above-described problems, and an object of the present invention is to provide a method for controlling the orientation and physical properties of a liquid crystal elastomer.

The technical problems to be solved by the present invention are not limited to the technical problems mentioned above, and other technical problems not mentioned will be clearly understood by those skilled in the art to which the present invention pertains from the following description.

### Technical Solution

To achieve the above object, the present invention provides a method for producing a liquid crystal elastomer, comprising: a first step of preparing a liquid crystal mixture by mixing a first liquid crystal monomer, a second liquid crystal monomer, a chain extender, and a photoinitiator; a second step of producing a liquid crystal oligomer by subjecting the liquid crystal mixture to oligomerization; a third step of extruding the liquid crystal oligomer using a 3D printer; and a fourth step of subjecting the extruded liquid crystal oligomer to UV curing.

The first liquid crystal monomer may be a nematic mesogen, and the second liquid crystal monomer may be a smectic mesogen.

In the first step, the first liquid crystal monomer and the second liquid crystal monomer may be mixed at a molar ratio of 10:90 to 40:60.

In the first step, the mixture of the first liquid crystal monomer and the second liquid crystal monomer, and the chain extender may be mixed at a molar ratio of 1 to 2:1.

In the first step, the photoinitiator may be mixed in an amount of 1 to 2 parts by weight based on 100 parts by weight of the liquid crystal mixture.

In the third step, the liquid crystal oligomer may be extruded at a pressure of 300 to 700 kPa.

In the third step, the extrusion temperature may be 30 to 60°C.

In the fourth step, the UV curing may be performed by exposing the extruded liquid crystal oligomer to UV light with a wavelength of 300 to 600 nm and an intensity of 20 to 40 mW cm⁻¹.

The present invention also provides a liquid crystal elastomer comprising: a first liquid crystal monomer; a second liquid crystal monomer; a chain extender; and a photoinitiator, wherein the first liquid crystal monomer is a nematic mesogen and the second liquid crystal monomer is a smectic mesogen.

The first liquid crystal monomer and the second liquid crystal monomer may be contained at a molar ratio of 10:90 to 40:60.

The mixture of the first liquid crystal monomer and the second liquid crystal monomer, and the chain extender may be contained at a molar ratio of 1 to 2:1.

The photoinitiator may be contained in an amount of 1 to 2 parts by weight based on 100 parts by weight of the mixture of the first liquid crystal monomer, the second liquid crystal monomer, the chain extender, and the photoinitiator.

The tensile strength of the liquid crystal elastomer may be 0.5 to 10 MPa.

The glass transition temperature (T_{g}) of the liquid crystal elastomer may be -10°C to -30°C.

The isotropization temperature (Tᵢ) of the liquid crystal elastomer may be 40°C to 70°C.

The present invention may also provide a liquid crystal elastomer fiber comprising a liquid crystal elastomer produced according to the above production method.

### Advantageous Effects

According to the Technical Solution to the Technical Problem, the present invention may fabricate liquid crystal elastomer fibers in large amounts using 3D printing and photocuring.

In particular, it is possible to a liquid crystal elastomer fiber that may exhibit not only the property of contracting in the longitudinal direction but also the property of expanding up to 30% in the longitudinal direction when the temperature is increased, depending on the types and composition of liquid crystal monomers.

In addition, it is possible to control mechanical properties and thermal properties depending on the types and composition of liquid crystal monomers, and also to control the degree of contraction and expansion.

The effects of the present invention are not limited to the effects mentioned above, and other effects not mentioned will be clearly understood by those skilled in the art from the following description.

### Brief Description of Drawings

FIG. 1 shows a process of fabricating liquid crystal elastomer (LCE) fibers. (a): a schematic diagram showing liquid crystal elastomer fiber fabrication (including extrusion, UV curing, and winding); (b): a photograph showing that liquid crystal elastomer fibers are fabricated.
FIG. 2 shows the diameter of a liquid crystal elastomer fiber as a function of the fiber drawing speed.
FIG. 3(a) is a POM image of LCE (R₀C₁₀₀) at 120°C, and FIG. 3(b) is a photograph of an LCE (R₀C₁₀₀) fiber extruded to a length of 10 m.
FIG. 4 shows the ¹H-NMR spectrum of a liquid crystal oligomer (R₁₀₀C₀).

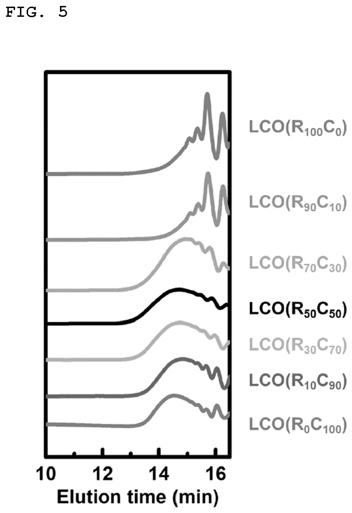

FIG. 5 is a size exclusion chromatography (SEC) graph of liquid crystal oligomers.
FIG. 6 shows the FT-IR spectra of a liquid crystal mixture (LCM), a liquid crystal oligomer (LCO), and a liquid crystal elastomer (LCE).
FIG. 7 shows the result of analyzing the gel content of extracted liquid crystal elastomer fibers in CHCl₃.
FIG. 8 shows DSC thermograms of liquid crystal oligomers.
FIG. 9 shows POM images of liquid crystal oligomer LCO (R₁₀₀C₀) in the nematic (91°C) and isotropic (91°C) phases (a) and liquid crystal oligomer LCO (R₀C₁₀₀) in the smectic (45°C) and isotropic (50°C) phases (b).
FIG. 10 shows DSC thermograms of liquid crystal elastomers during a second heating cycle at a rate of 10°C/min⁻¹.
FIG. 11 shows the behavior of liquid crystal elastomer fibers upon heating. (a): Photographs of liquid crystal elastomer fibers at 30°C (left) and 120°C (right); (b): temperature-dependent change in length of liquid crystal elastomer fibers; and (c): behavior strain of liquid crystal elastomer fibers.
FIG. 12 shows a setup for WAXS measurement of liquid crystal elastomer fibers (a), 2D-WAXS patterns (b), azimuth plots (c), calculated order parameters (d), and order parameters of liquid crystal elastomer fibers as a function of temperature.
FIG. 13 shows cross-sectional POM images of liquid crystal elastomer fiber LCE (R₁₀₀C₀) (a) and liquid crystal elastomer fiber LCE (R₀C₁₀₀) (b).
FIG. 14 shows stress-strain curves of liquid crystal elastomer fibers.
FIG. 15 schematically shows the mesogen orientation and thermal actuation of contractile (a) and elongated (b) liquid crystal elastomer fibers.

### Best Mode

The terms used in the present invention are currently widely used general terms selected in consideration of their functions in the present invention, but they may change depending on the intents of those skilled in the art, precedents, or the advents of new technology. Additionally, in certain cases, there may be terms arbitrarily selected by the applicant, and in this case, their meanings will be described in a corresponding description part of the present invention. Accordingly, terms used in the present invention should be defined based on the meaning of the term and the entire contents of the present invention, rather than the simple term name.

Unless otherwise defined, all terms used herein, including technical or scientific terms, have the same meanings as understood by those skilled in the art to which the present disclosure pertains. Terms such as those used in general and defined in dictionaries should be interpreted as having meanings identical to those specified in the context of related technology. Unless definitely defined in the present application, the terms should not be interpreted as having ideal or excessively formative meanings.

Throughout the present specification, when any part is refeerred to as "comprising" any component, this means that, unless specifically stated otherwise, the part does not exclude other components but may further include other components.

Hereinafter, embodiments of the present invention will be described in detail with reference to the accompanying drawings so that those skilled in the art can easily implement the present invention. However, the present invention may be embodied in various different forms and is not limited to the embodiments described herein.

Hereinafter, the present invention will be described in detail.

The present invention provides a method for producing a liquid crystal elastomer, comprising: a first step of preparing a liquid crystal mixture by mixing a first liquid crystal monomer, a second liquid crystal monomer, a chain extender, and a photoinitiator; a second step of producing a liquid crystal oligomer by subjecting the liquid crystal mixture to oligomerization; a third step of extruding the liquid crystal oligomer using a 3D printer; and a fourth step of subjecting the extruded liquid crystal oligomer to UV curing.

The liquid crystal oligomer may be synthesized by the aza-Michael addition reaction between the mixture of the first liquid crystal monomer and the second liquid crystal monomer, and the chain extender. More specifically, the aza-Michael addition reaction may be performed through chain extension of the liquid crystal monomers and chain extender present in the liquid crystal mixture, and the liquid crystal monomers and the chain extender may be oligomerized through the addition reaction.

The first liquid crystal monomer may be a nematic mesogen, and the second liquid crystal monomer may be a smectic mesogen. Preferably, the first liquid crystal monomer may be 1,4-bis-[4-(6-acryloyloxyhexyloxy)benzoyloxy]-2-methylbenzene (RM82), and the second liquid crystal monomer may be 4-(6-(acryloyloxy)hexyloxy)-phenyl-4-(6-(acryloyloxy)hexyloxl)benzoate (C6BAPE), without being limited thereto.

In the first step above, the first liquid crystal monomer and the second liquid crystal monomer may be mixed at a molar ratio of 10:90 to 40:60. According to one embodiment of the present invention, when the second liquid crystal monomer is mixed within the above range, the liquid crystal elastomer may exhibit the property of expanding when heated. More specifically, depending on the relative composition of the first liquid crystal monomer and the second liquid crystal monomer, the liquid crystal elastomer may exhibit the property of contracting or expanding when heated. The mesogens of contractile liquid crystal elastomer fibers are aligned along the fiber axis, whereas the mesogens of expandable liquid crystal elastomer fibers may be aligned perpendicular to the fiber axis. The alignment of the mesogens may be determined only by the type of liquid crystal phase during the extrusion process, and nematic phase extrusion may produce constractile fibers, while smectic phase extrusion may produce elongated fibers. In addition, by adjusting the relative composition of the nematic mesogen monomer and the smectic mesogen monomer, the order parameter and actuation performance including strain and temperature may be systematically controlled.

In the first step, the chain extender may be n-butylamine (n-BA) as a component connecting the liquid crystal monomers.

In the first step, the photoinitiator may be 2-benzyl-2-dimethylamino-1-(4-morpholinophenyl)-butanone-1 (I-369) as a component for photocrosslinking by UV curing performed in the fourth step.

In the first step, the mixture of the first liquid crystal monomer and the second liquid crystal monomer, and the chain extender may be mixed at a molar ratio of 1 to 2:1, preferably 1.1:1, without being limited thereto.

In the first step, the photoinitiator may be mixed in an amount of 1 to 2 parts by weight, preferably 1.5 parts by weight, based on 100 parts by weight of the liquid crystal mixture, without being limited thereto.

The mechanical and thermal properties of the liquid crystal elastomer produced may vary depending on the molar ratio between the liquid crystal monomer, chain extender, and photoinitiator. When the molar ratio is within the above-described range, the produced liquid crystal elastomer may have improved mechanical and thermal properties, and thus the molar ratio within the above range is desirable. Furthermore, the physical properties may be controlled to desired physical properties by adjusting the molar ratio.

The second step may comprise: step 2-1 of placing the liquid crystal mixture in an extruder barrel, followed by mixing while heating to 110 to 130°C with a heat gun; and step 2-2 of producing a liquid crystal oligomer by subjeting the resulting liquid crystal mixture to oligomerization at 60 to 70°C for 12 to 48 hours. Preferably, the second step may comprise: step 2-1 of placing the liquid crystal mixture in an extruder barrel, followed by mixing while heating to 120°C with a heat gun; and step 2-2 of producing a liquid crystal oligomer by subjecting the resulting liquid crystal mixture to oligomerization at 65°C for 24 hours, without being limited thereto.

In the third step, a liquid crystal elastomer may be produced through a melt-spinning process of extrudiing the liquid crystal oligomer using a 3D printer equipped with a high-pressure extruder and a 6.0-mm-diameter nozzle, followed by winding around a rotating mandrel.

The third step may extrude the liquid crystal oligomer at a pressure of 300 to 700 kPa, preferably 500 kPa, without being limited thereto.

In the third step above, the extrusion temperature may be 30 to 60°C. Preferably, the extrusion temperature may be 40 to 45°C, without being limited thereto.

In the third step, the winding speed may be 200 to 600 mm min⁻¹.

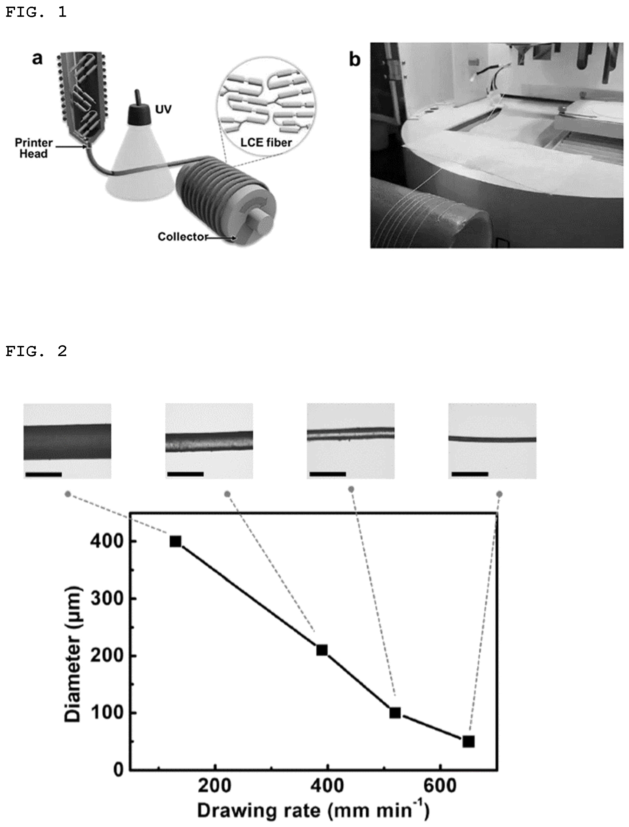

Before winding around the winding device, the extruded liquid crystal oligomer may be exposed to strong UV light for photopolymerization, thereby producing a liquid crystal elastomer fiber (FIG. 1).

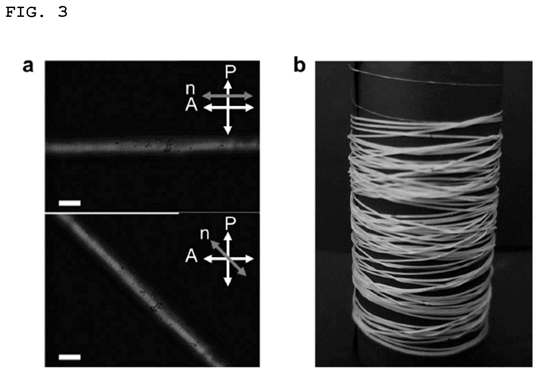

The diameter of the liquid crystal elastomer fiber may be adjusted through process parameters such as extrusion temperature and winding speed (FIG. 2). Using the process, a uniformly aligned liquid crystal elastomer fiber with a diameter of 50 to 400 µm and a length exceeding 10 m may be easily produced (FIG. 3).

The fourth step may perform UV curing by exposing the extruded liquid crystal oligomer to UV light with a wavelength of 300 to 600 nm and an intensity of 20 to 40 mW cm⁻¹. Preferably, UV curing may be performed by exposure to UV light with a wavelength of 320 to 500 nm and an intensity of 35 mW cm⁻¹, without being limited thereto.

The present invention also provides a liquid crystal elastomer comprising: a first liquid crystal monomer; a second liquid crystal monomer; a chain extender; and a photoinitiator, wherein the first liquid crystal monomer is a nematic mesogen, and the second liquid crystal monomer is a smectic mesogen.

The first liquid crystal monomer may be 1,4-bis-[4-(6-acryloyloxyhexyloxy)benzoyloxy]-2-methylbenzene (RM82), and the first second crystal monomer may be 4-(6-(acryloyloxy)hexyloxy)-phenyl-4-(6-(acryloyloxl)hexyloxy)benzoate (C6BAPE), without being limited thereto.

The chain extender may be n-butylamine (n-BA) as a component connecting the liquid crystal monomers.

The photoinitiator may be 2-benzyl-2-dimethylamino-1-(4-morpholinophenyl)-butanone-1 (I-369).

The first liquid crystal monomer and the second liquid crystal monomer may be contained at a molar ratio of 10:90 to 40:60.

The mixture of the first liquid crystal monomer and the second liquid crystal monomer, and the chain extender may be contained at a molar ratio of 1 to 2:1.

The photoinitiator may be contained in an amount of 1 to 2 parts by weight based on 100 parts by weight of the mixture of the first liquid crystal monomer, the second liquid crystal monomer, the chain extender, and the photoinitiator.

The tensile strength of the liquid crystal elastomer may be 0.5 to 10 MPa.

The glass transition temperature (T_{g}) of the liquid crystal elastomer may be -10°C to -30°C.

The isotropization temperature (Tᵢ) of the liquid crystal elastomer may be 40°C to 70°C.

The present invention may also provide a liquid crystal elastomer fiber comprising a liquid crystal elastomer produced according to the above-described production method.

Hereinafter, the present invention will be described in detail with reference to examples. However, the examples according to the present invention may be modified into various different forms, and the scope of the present invention is not interpreted as being limited to the examples described below. The examples of the present specification are provided to more completely explain the present invention to those skilled in the art.

### Example 1. Production of Liquid Crystal Oligomer 1

A liquid crystal oligomer was synthesized by the aza-Michael addition reaction between liquid crystal monomers (RM82 and C6BAPE) and n-BA. RM82 and C6BAPE were mixed at a molar ratio of 10:90. The liquid crystal monomer mixture (RM82 and C6BAPE) and n-butylamine (n-BA) were mixed at a molar ratio of 1.1:1, and I-369 was added in an amount of 1.5 parts by weight based on 100 parts by weight of the liquid crystal mixture. The liquid crystal mixture containing RM82, C6BAPE, n-BA, and I-369 was placed in an extruder barrel and thoroughly mixed using a vortex while heating (120°C) with a heat gun. Thereafter, the liquid crystal mixture was subjected to an oligomerization reaction in a convection oven at 65°C for 24 hours, thereby synthesizing a liquid crystal oligomer.

### Example 2. Production of Liquid Crystal Oligomer 2

A liquid crystal oligomer was produced in the same manner as in Example 1, except that RM82 and C6BAPE were mixed at a molar ratio of 30:70.

### Example 3. Production of Liquid Crystal Elastomer Fiber 1

Liquid crystal elastomer fiber was produced using liquid crystal oligomer 1 (RM82:C6BAPE = 10:90, R₁₀C₉₀) produced in Example 1. The liquid crystal elastomer fiber was produced using a 3D printer (Dr. INVIVO, Rokit Healthcare) equipped with a pneumatic extruder and a 0.6-mm-diameter nozzle. The liquid crystal oligomer was extruded at a constant pressure of 500 kPa and a high temperature. The extrusion was performed at an extrusion temperature of 40°C and a winding speed of 390 mm min⁻¹. The extrusion temperature varies depending on the oligomer composition, but generally, the extrusion is generally performed at a temperature by about a few degrees lower than the isotropization temperature to maintain the liquid crystal phase. The extruded oligomer was carefully pulled and placed on a rotary mandrel (BLDC motor 30W, DISSOL) wrapped with a Teflon sheet. Then, the oligomer was exposed to UV light (OmniCure S1500, λ = 320-500 nm and 30 mW cm⁻¹) for photopolymerization, thereby producing liquid crystal elastomer fiber.

### Example 4. Production of Liquid Crystal Elastomer Fiber 2

Liquid crystal elastomer fiber was produced in the same manner as in Example 3, except that liquid crystal oligomer 2 (RM82:C6BAPE = 30:70, R₃₀C₇₀) was used and the extrusion temperature was 45°C.

### Comparative Example 1. Production of Liquid Crystal Oligomer 3

A liquid crystal oligomer was produced in the same manner as in Example 1, except that RM82 and C6BAPE were mixed at a molar ratio of 0:100.

### Comparative Example 2. Production of Liquid Crystal Oligomer 4

A liquid crystal oligomer was produced in the same manner as in Example 1, except that RM82 and C6BAPE were mixed at a molar ratio of 50:50.

### Comparative Example 3. Production of Liquid Crystal Oligomer 5

**A** liquid crystal oligomer was produced in the same manner as in Example 1, except that RM82 and C6BAPE were mixed at a molar ratio of 70:30.

### Comparative Example 4. Production of Liquid Crystal Oligomer 6

**A** liquid crystal oligomer was produced in the same manner as in Example 1, except that RM82 and C6BAPE were mixed at a molar ratio of 90:10.

### Comparative Example 5. Production of Liquid Crystal Oligomer 7

A liquid crystal oligomer was produced in the same manner as in Example 1, except that RM82 and C6BAPE were mixed at a molar ratio of 100:0.

### Comparative Example 6. Production of Liquid Crystal Elastomer Fiber 3

Liquid crystal elastomer fiber was produced in the same manner as in Example 3, except that liquid crystal oligomer 3 (RM82:C6BAPE = 0:100, R₀C₁₀₀) was used and the winding speed was 260 mm min⁻¹.

### Comparative Example 7. Production of Liquid Crystal Elastomer Fiber 4

Liquid crystal elastomer fiber was produced in the same manner as in Example 3, except that liquid crystal oligomer 4 (RM82:C6BAPE = 50:50, R₅₀C₅₀) was used and the winding speed was 260 mm min⁻¹.

### Comparative Example 8. Production of Liquid Crystal Elastomer Fiber 5

Liquid crystal elastomer fiber was produced in the same manner as in Example 3, except that liquid crystal oligomer 5 (RM82:C6BAPE = 70:30, R₇₀C₃₀) was used and the winding speed was 260 mm min⁻¹.

### Comparative Example 9. Production of Liquid Crystal Elastomer Fiber 6

Liquid crystal elastomer fiber was produced in the same manner as in Example 3, except that liquid crystal oligomer 6 (RM82:C6BAPE = 90:10, R₉₀C₁₀) was used and the extrusion temperature was 50°C.

### Comparative Example 10. Production of Liquid Crystal Elastomer Fiber 7

Liquid crystal elastomer fiber was produced in the same manner as in Example 3, except that liquid crystal oligomer 7 (RM82:C6BAPE = 100:0, R₁₀₀C₀) was used, the extrusion temperature was 60°C, and the winding speed was 520 mm min⁻¹.

### Experimental Example 1. Material Characterization

### 1-1. ¹H NMR spectra

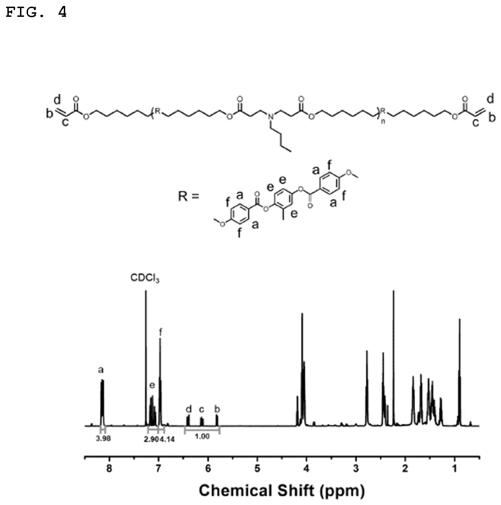

To determine the number-average molecular weight of the liquid crystal oligomer according to the present invention, the ¹H NMR of the liquid crystal oligomer (R₁₀₀C₀) was measured on a Bruker Ascend 400 MHz spectrophotometer using CDCl₃ as the solvent, and the results are shown in FIG. 4.

Referring to FIG. 4, the number-average molecular weight (Mₙ) is 4,400 g mol⁻¹ as calculated by the end group analysis. The peaks appearing at 5.8-6.5 ppm in the peak spectrum of ¹H-NMR (b-d) correspond to six protons of the terminal acrylate group. The integral value of the peaks was used to correct other peaks and was set to one. The peak at 8.1-8.2 ppm (a) corresponds to four protons in the benzene of RM82, and its integral value is 3.98. Therefore, the degree of polymerization (DP) was calculated as follows. (3.98 / 4 × 6) = 5.9. Since the terminal group consists of RM82, Mₙ was calculated as (DP-1) × Mₙ of the repeating unit (4.9 × 745.9 g mol⁻¹) + Mₙ of RM82 (672.76 g mol⁻¹) = 4,400 g mol⁻¹.

It can be confirmed through the above-described ¹H NMR spectrum that the liquid crystal oligomer according to the present invention has been produced, and that the liquid crystal oligomer has a number-average molecular weight of 4,400 g mol⁻¹.

### 1-2. Size exclusion chromatography (SEC)

To determine the number-average molecular weight of the liquid crystal oligomer according to the present invention, SEC analysis of the liquid crystal oligomers produced in the Examples and the Comparative Examples was performed on an Agilent 1260 Infinity II LC system equipped with a refractive index detector and a PSS SDV (PLgel 5 µm MIXED D, 7.5 × 300 mm) column. As the eluent, THF was at a flow rate of 1 mL/min⁻¹ at 40°C. A calibration curve was constructed using a polystyrene standard. The texture and alignment of the liquid crystal oligomers and the liquid crystal elastomers were characterized using a polarizing optical microscope (POM, Nikon Eclipse LV100N POL) equipped with a heating stage (Linkam LTS420), and the results are shown in FIG. 2 and Table 1 below.

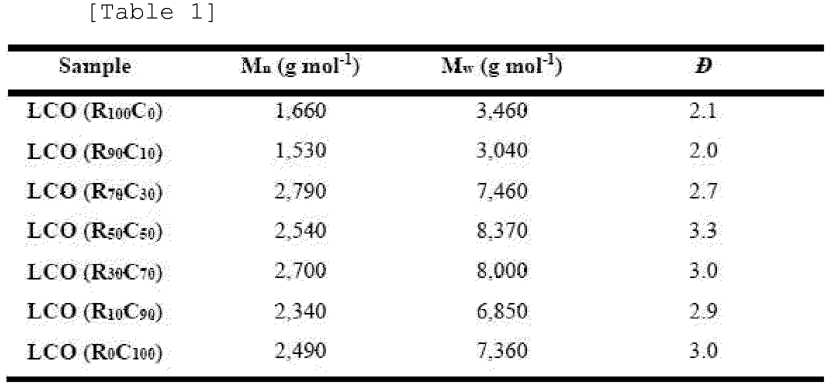

**A refractive index detector was used, and a calibration curve was constructed using a polystyrene standard at 40°C.**

Referring to FIG. 2 and Table 1 above, the Mₙs of the liquid crystal oligomers determined by SEC analysis had a broad molecular weight distribution (2.0 to 3.3) and were in the range of 1,500 to 2,800 g mol⁻¹. The liquid crystal oligomers and the liquid crystal elastomers are denoted as LCO (RₓC_{y}) and LCE (RₓC_{y}), respectively, wherein R and C represent RM82 and C6BAPE, respectively, and x and y represent the relative molar ratio between RM82 and C6BAPE.

### Experimental Example 2. Analysis of Molecular and Thermal Properties

### 2-1. Fourier Transform Infrared (FT-IR) Analysis

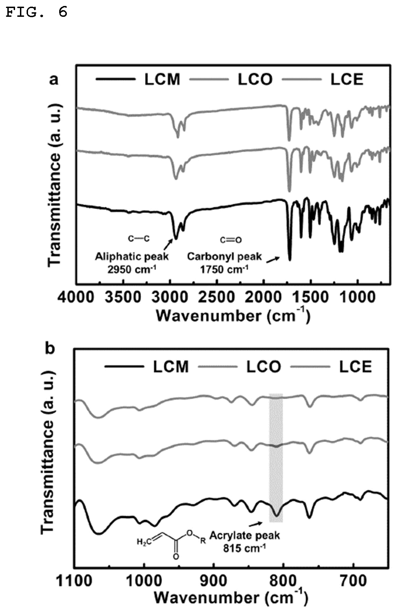

To monitor changes in functional groups during the synthesis of the liquid crystal oligomers and liquid crystal elastomers according to the present invention, FT-IR spectra of the liquid crystal oligomers and liquid crystal elastomers produced in the Examples and the Comparative Examples were recorded on a Jasco FTIR-4600 spectrometer at 4,000-650 cm⁻¹. Background spectra were obtained by scanning a clean ATR crystal (32 scans at 4 cm⁻¹ resolution). The results are shown in FIG. 6.

Referring to FIG. 6, the acrylate group of the liquid crystal oligomer disappeared at 815 cm⁻¹ after photopolymerization, indicating that the liquid crystal elastomer was successfully synthesized.

### 2-2. Gel Fraction Characteristics of Liquid Crystal Elastomer

To analyze the gel fraction characteristics of the liquid crystal elastomer according to the present invention, the liquid crystal elastomer fiber according to the present invention was immersed in calcium chloride (CHCl₃) at room temperature for 72 hours to extract the uncrosslinked portion. Then, the sample was dried in a vacuum oven at room temperature for 72 hours.

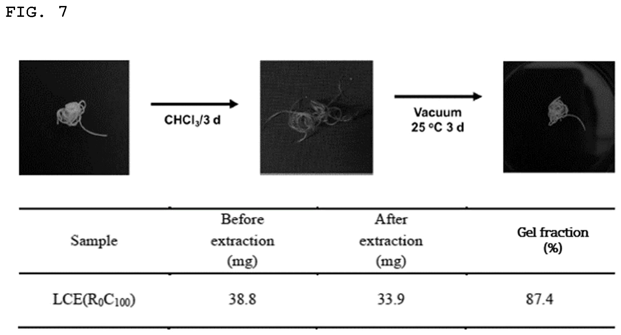

The gel fraction (G) was calculated according to Equation 1 below, and the results are shown in FIG. 7. [Equation 1] $G \left(%\right) = \frac{{m}_{f}}{{m}_{i}} \times 100 %$

(wherein mᵢ is the initial mass of the fiber before immersion, and m_{f} is the mass of the fiber after drying and extraction.)

Referring to FIG. 7, the gel fraction value of the representative liquid crystal elastomer fiber (LCE (R₀C₁₀₀)) was about 87%, which means that sufficient crosslinking occurred.

### 2-3. Differential Scanning Calorimetry (DSC)

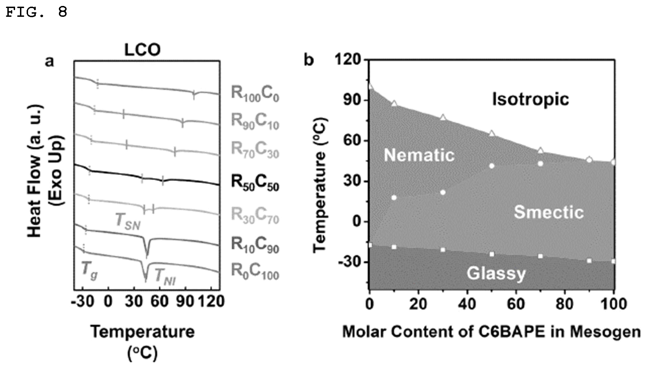

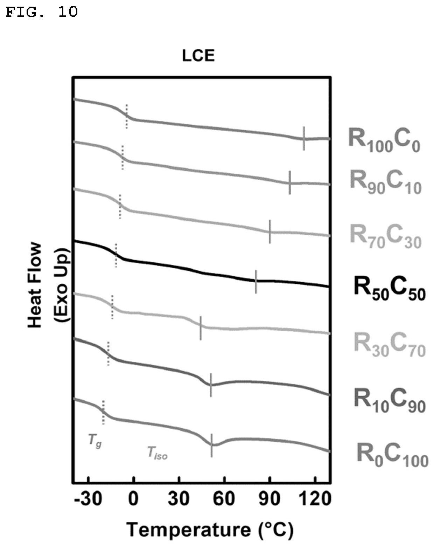

To analyze the thermal properties of the liquid crystal oligomers and liquid crystal elastomers according to the present invention, differential scanning calorimetry (DSC) of the liquid crystal oligomers and liquid crystal elastomer produced in the Examples was performed using TA Instruments Discovery DSC 25. The samples underwent a heating-cooling-heating cycle at a temperature of -50 to 150°C at a rate of 10°C/min⁻¹ under a nitrogen atmosphere. The results are shown in FIGS. 8 and 10 and Table 2 below.

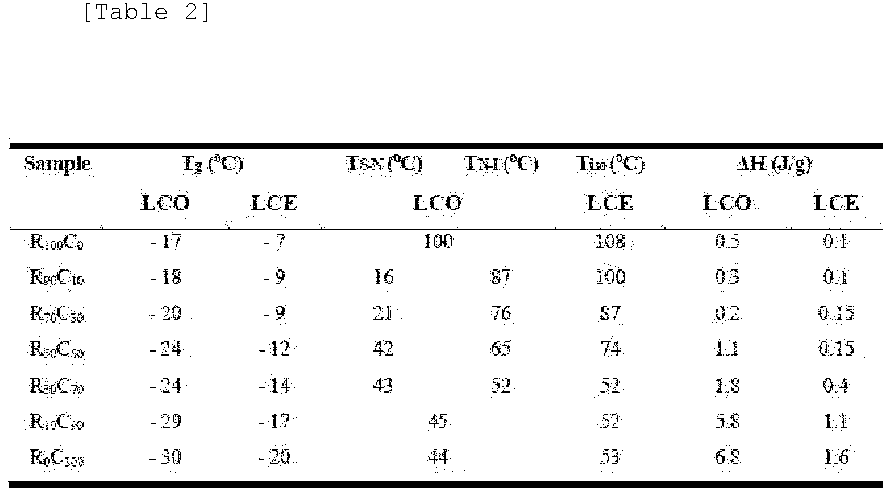

### Measured on the second DSC heating curve at a rate of 10°C/min⁻¹ under a nitrogen atmosphere

Referring to FIG. 8 and Table 2 above, the liquid crystal oligomers exhibits a glass transition temperature (T_{g}) and an isotropization temperature (Tᵢ). As the C6BAPE content in the liquid crystal oligomer increases, both T_{g} (from -17°C to -30°C) and Tᵢ (from 100°C to 40°C) gradually decrease. The decrease in both transition temperatures is associated with the unique molecular structure of C6BAPE. Unlike the three phenyl groups in RM82, C6BAPE contains only two phenyl groups in its molecular structure, and thus π-π interactions in the mesogenic core decrease. On the other hand, as the C6BAPE content increases, the enthalpy of Tᵢ tends to increase from 0.5 to 6.8 Jg⁻¹. This result is also due to the difference in molecular properties between RM82 and C6BAPE. (i.e., RM82 is nematogenic and C6BAPE is smectogenic.)

Both the nematic and smectic phases were detected in the liquid crystal oligomers composed of sufficient amounts of nematogen and smectogen. The coexistence of these two phases is pronounced when the proportions of the two liquid crystal monomers are similar, as summarized in the phase diagram (FIG. 8b).

When a chain network is formed by photopolymerization, both thermal transition temperatures (T_{g} and Tᵢ) of the liquid crystal elastomer increase by about 10°C. In particular, it is observed that Tᵢ widens and the enthalpy value decreases significantly (FIG. 10). Unlike the liquid crystal oligomers, the peaks associated with the smectic-nematic transition (T_{SN}) and the nematic-isotropic transition (T_{NI}) can no longer be distinguished. All these results are due to the bridging structure that limits chain mobility and limits the degrees of freedom for the transition between liquid crystal order and disorder.

### 2-4. Polarizing Optical Microscope (POM)

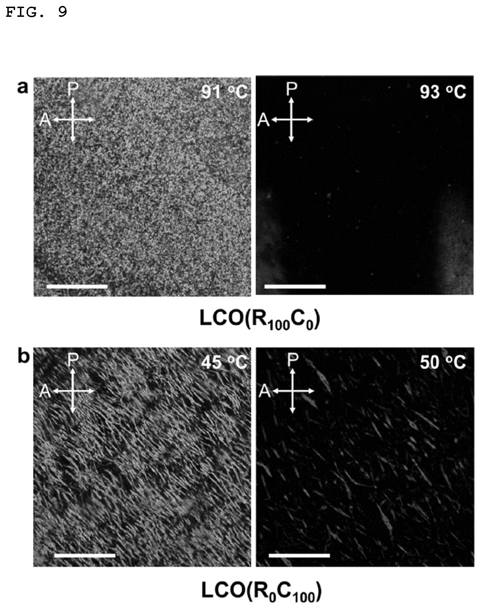

To identify the texture and alignment of the liquid crystal oligomer and liquid crystal elastomer according to the present invention, the liquid crystal oligomer and liquid crystal elastomer produced in the Example and the Comparative Example were measured using a polarizing optical microscope (POM, Nikon Eclipse LV100N POL), and the results are shown in FIG. 9.

Referring to FIG. 9, the liquid crystal oligomer LCO (R₁₀₀C₀) exhibits a Schlieren texture, which is typically observed in the nematic phase, whereas the liquid crystal oligomer LCO (R₀C₁₀₀) exhibits a fiber-like texture, suggesting that it is the smectic phase. Since the smectic phase is of a higher order than the nematic phase, the associated thermal energy that disrupts the liquid crystal order is also greater, reflecting a higher enthalpy.

### Experimental Example 3. Thermal Actuation Properties of Liquid Crystal Elastomers

To evaluate the thermal actuation properties of the liquid crystal elastomer according to the present invention, the liquid crystal elastomer fibers produced in the Examples and the Comparative Examples were repeatedly heated and cooled over several cycles between 30°C and 130°C. Dimensional changes were monitored using a POM equipped with a heating stage at 10°C intervals.

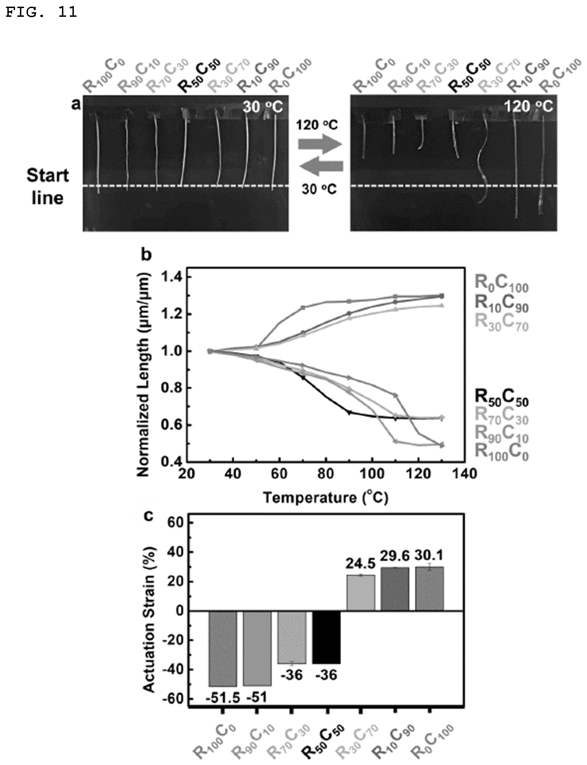

Referring to FIG. 11, the liquid crystal elastomer fibers with a relatively high nematogenic content (i.e., LCE (R₁₀₀C₀), LCE (R₉₀C₁₀), and LCE (R₇₀C₃₀)) undergo thermotropic contraction along the fiber axis. Liquid crystal elastomer fibers with a relatively high smectogenic content (i.e., LCE (R₀C₁₀₀), LCE(R₁₀C₉₀), and LCE (R₃₀C₇₀)) exhibit spontaneous elongation when heated above Tᵢ. The cause of this completely opposite actuation behavior is associated with the different orientations of the mesogens relative to the fiber axis.

In general, the actuation temperature of liquid crystal elastomer fibers gradually decreases as the C6BAPE content increases, regardless of the actuation direction. The reduced actuation temperature is associated with weaker π-π interactions. Additionally, the actuation strain is significantly affected by the relative ratio between RM82 and C6BAPE in the liquid crystal elastomer fibers. In particular, as the symmetry ratio between the two liquid crystal monomers increases, the actuation strain decreases regardless of the actuation direction.

### Experimental Example 4. Morphological Analysis of Liquid Crystal Elastomer Fibers

For morphological analysis of the liquid crystal elastomer according to the present invention, WAXS analysis of the liquid crystal elastomers produced in the Examples and the Comparative Examples at the 9A U-SAXS beamline of the Pohang Accelerator Laboratory (PAL), Korea. 2D scattering patterns were acquired using a 2D charge-coupled device area detector (Rayonix MX170-HS) with an X-ray wavelength (λ) of 0.6258 Å (E = 19.81 keV). The distance between the sample and the detector for WAXS measurement was set to 0.38 m.

Temperature-resolved WAXS analysis was performed by heating the liquid crystal elastomer fiber with a heating wire, and the order parameter (S) was calculated from the azimuthal plot using Equation 2 below. [Equation 2] $\begin{matrix}S = 1 - {N}^{- 1} \frac{3}{2} {\int }_{0}^{\frac{π}{2}} I \left(θ\right) \left[{sin}^{2}θ+\left({sinθcos}^{2}θ\right)ln\frac{1 + sinθ}{cosθ}dθ\right. \\ N = {\int }_{0}^{\frac{π}{2}} I \left(θ\right) dθ\end{matrix}$

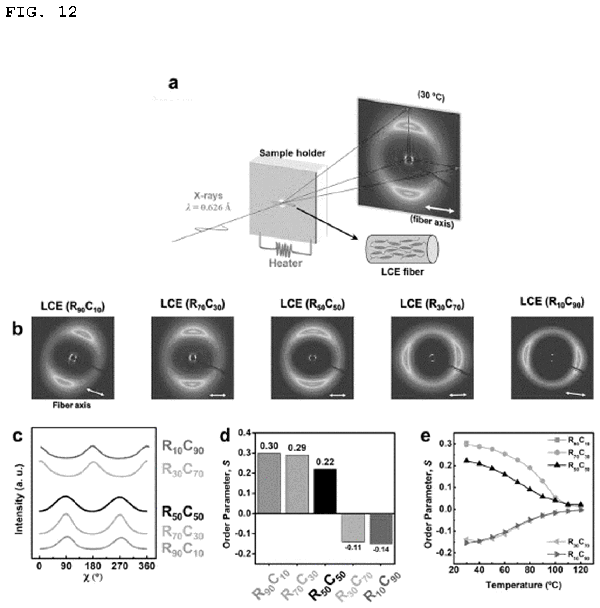

As can be seen in FIG. 12a, an aligned optical cable sample is mounted on a sample holder whose temperature can be controlled by a heating apparatus. Then, the sample is exposed to an X-ray beam at various temperatures and the 2D-WAXS pattern is recorded.

Nematogen-rich liquid crystal elastomer fibers (i.e., LCE (R₉₀C₁₀), LCE (R₇₀C₃₀), and LCE (R₅₀C₅₀)) have mesogens aligned along the fiber axis and display small-angle four-point "eyebrow" patterns that are characteristic of a cybotactic packing of the nematic phase (FIG. 12b). In contrast, the mesogen alignment of smectogen-rich liquid crystal elastomer fibers (i.e., LCE (R₃₀C₇₀) and LCE (R₁₀C₉₀)) is orthogonal to the fiber axis and display sharp internal reflections at small angles, which suggests a smectic A phase. The order parameter calculated based on the azimuthal scan profile at *q*o = 1.41 Å⁻¹ is significantly influenced by the relative composition of the liquid crystal monomers in the liquid crystal elastomer fiber (FIGS. 12c and 12d). The order parameter gradually decreases as the smectogenic content increases and reaches a negative value when the liquid crystal phase changes from the nematic phase to the smectic phase. In addition, upon heating, the order parameter gradually decreases and eventually becomes 0 at a temperature above Tᵢ (FIG. 12e).

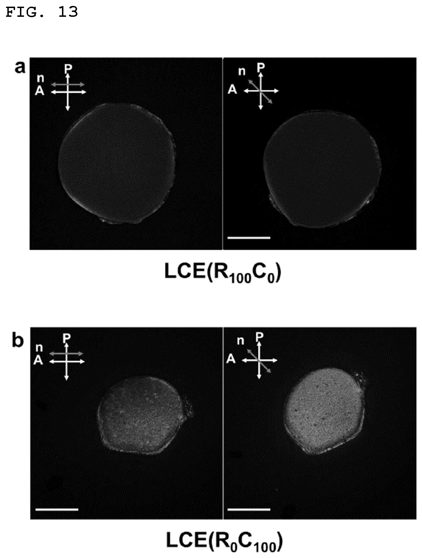

In addition, cross-sections of nematic and smectic liquid crystal elastomer optical fibers were examined using POM with microtome samples, and the results are shown in FIG. 13. In the case of the nematic liquid crystal elastomer optical fiber LCE (R₁₀₀C₀), no birefringence was observed at any observation angle, indicating orientation similar to allotropy.

In contrast, the smectic liquid crystal elastomer fiber LCE (R₀C₁₀₀) exhibits distinct birefringence at 45° and appears dark at 0° or 90°. Based on this observation, it can be inferred that the cross-section of LCE (R₀C₁₀₀) may adopt a bipolar orientation or a monodomain-like orientation.

### Experimental Example 5. Mechanical Properties of Liquid Crystal Elastomer Fibers

To evaluate the mechanical properties of the liquid crystal elastomer according to the present invention, the strain-stress responses of the liquid crystal elastomer fibers produced in the Examples and the Comparative Examples were measured using a dynamic mechanical analyzer (TA Instruments, DMA Q850) with a tension film clamp. For stress-strain analysis, each sample (5 mm length, 0.3 mm width, and 0.3 mm thickness) was equilibrated at 25°C under a preload of 1 mN and the force was increased at a rate of 0.05 N/min⁻¹.

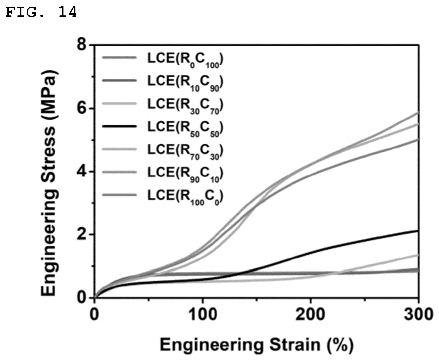

Referring to FIG. 14 and Table 3 below, the elastic modulus and tensile strength of nematogen-rich liquid crystal elastomer fibers (i.e., LCE (R₁₀₀C₀), LCE (R₉₀C₁₀), and LCE (R₇₀C₃₀)) are significantly higher than those of smectogen-rich LCE fibers (i.e., LCE (R₃₀C₇₀), LCE (R₁₀C₉₀), and LCE (R₀C₁₀₀)). In particular, the tensile strength of the nematogen-rich LCE fibers was nearly three times higher than that of the smectogen-rich liquid crystal elastomer fibers, but none of these fibers broke during DMA measurements. The mechanical properties of the smectogen-rich liquid crystal elastomer fibers are significantly weaker because the mesogens are orthogonally aligned along the fiber axis, which is consistent with the WAXS results.

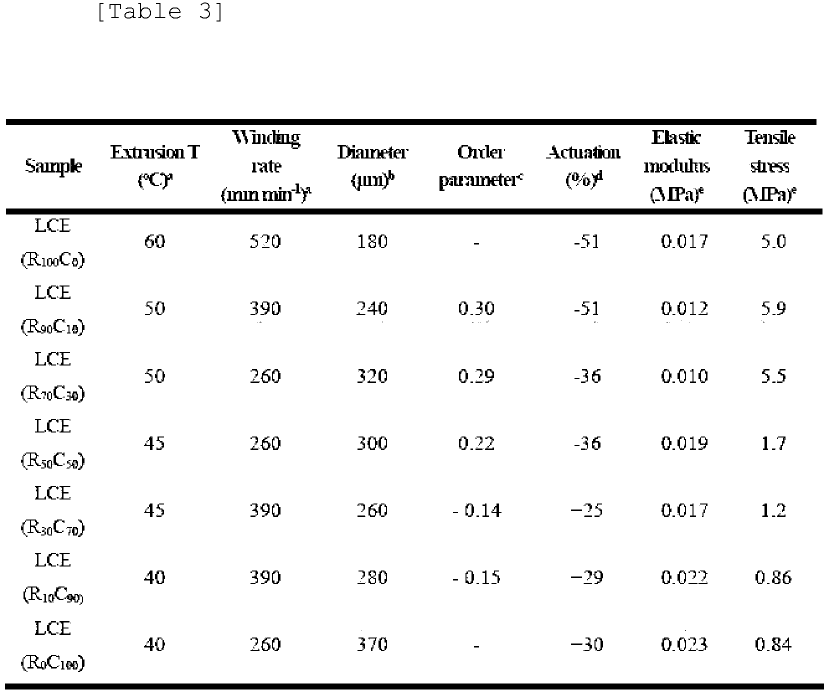

**A. Extrusion temperature during LCE fiber production. The printing pressure was constant at 500 kPa**
**B. Measured using an optical microscope**
**C. Measured through X-ray scattering analysis**
**D. Measured using an optical microscope during heating and cooling.** (-) **and (+) represent thermotropic contraction and thermotropic elongation, respectively**
**E. Measured through dynamic mechanical analysis at 25°C**

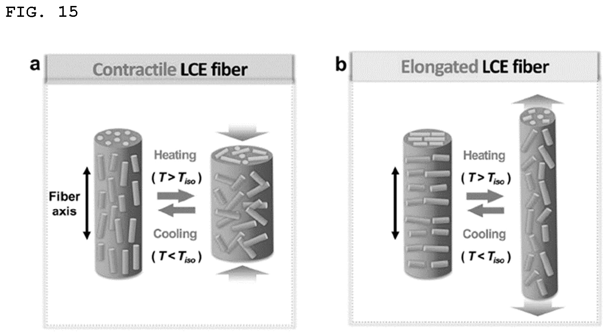

Based on the results of WAXS, POM, and mechanical property analysis, the mesogen alignment and actuation principle of nematic and smectic liquid crystal elastomer fibers are shown in FIG. 15. Meanwhile, the mesogens of the nematic liquid crystal elastomer fiber are aligned along the fiber axis, exhibiting a homeotropic-like cross-section. As a result, the nematic liquid crystal elastomer fiber contracts when heated above Tᵢ and elongates when cooled below Tᵢ, similar to conventional uniaxially aligned liquid crystal elastomers. On the other hand, the mesogens of the smectic liquid crystal elastomer fiber are aligned perpendicular to the fiber axis, exhibiting a bipolar-like cross-section. Consequently, the smectic LCE fiber exhibits spontaneous elongation and contraction when heated above below Tᵢ and cooled below Tᵢ, respectively.

So far, the embodiments of the present invention have been described. Those of ordinary skill in the art to which the present invention pertains will appreciate that the present invention may be embodied in modified forms without departing from the essential characteristics of the present invention. Therefore, the disclosed embodiments should be considered from an illustrative point of view, not from a restrictive point of view. The scope of the present invention is defined by the claims rather than the foregoing description, and all differences within the scope equivalent thereto should be construed as being included in the present invention.

## Claims

1. A method for producing a liquid crystal elastomer, comprising:
a first step of preparing a liquid crystal mixture by mixing a first liquid crystal monomer, a second liquid crystal monomer, a chain extender, and a photoinitiator;
a second step of producing a liquid crystal oligomer by subjecting the liquid crystal mixture to oligomerization;
a third step of extruding the liquid crystal oligomer using a 3D printer; and
a fourth step of subjecting the extruded liquid crystal oligomer to UV curing.

2. The method for producing a liquid crystal elastomer according to claim 1, wherein the first liquid crystal monomer is a nematic mesogen, and the second liquid crystal monomer is a smectic mesogen.

3. The method for producing a liquid crystal elastomer according to claim 1, wherein, in the first step, the first liquid crystal monomer and the second liquid crystal monomer are mixed at a molar ratio of 10:90 to 40:60.

4. The method for producing a liquid crystal elastomer according to claim 1, wherein, in the first step, the mixture of the first liquid crystal monomer and the second liquid crystal monomer mixture, and the chain extender are mixed at a molar ratio of 1 to 2:1.

5. The method for producing a liquid crystal elastomer according to claim 1, wherein, in the first step, the photoinitiator is mixed in an amount of 1 to 2 parts by weight based on 100 parts by weight of the liquid crystal mixture.

6. The method for producing a liquid crystal elastomer according to claim 1, wherein the third step comprises extruding the liquid crystal oligomer at a pressure of 300 to 700 kPa.

7. The method for producing a liquid crystal elastomer according to claim 1, wherein the extrusion in the third step is performed at a temperature of 30°C to 60°C.

8. The method for producing a liquid crystal elastomer according to claim 1, wherein the fourth step comprises performing the UV curing by exposing the extruded liquid crystal oligomer to UV light with a wavelength of 300 to 600 nm and an intensity of 20 to 40 mW cm⁻¹.

9. A liquid crystal elastomer comprising:
a first liquid crystal monomer;
a second liquid crystal monomer;
a chain extender; and
a photoinitiator,
wherein the first liquid crystal monomer is a nematic mesogen, and the second liquid crystal monomer is a smectic mesogen.

10. The liquid crystal elastomer according to claim 9, wherein the first liquid crystal monomer and the second liquid crystal monomer are contained at a molar ratio of 10:90 to 40:60.

11. The liquid crystal elastomer according to claim 9, wherein the mixture of the first liquid crystal monomer and the second liquid crystal monomer, and the chain extender are contained at a molar ratio of 1 to 2:1.

12. The liquid crystal elastomer according to claim 9, wherein the photoinitiator is contained in an amount of 1 to 2 parts by weight based on 100 parts by weight of the mixture of the first liquid crystal monomer, the second liquid crystal monomer, the chain extender, and the photoinitiator.

13. The liquid crystal elastomer according to claim 9, wherein the liquid crystal elastomer has a tensile strength of 0.5 to 10 MPa.

14. The liquid crystal elastomer according to claim 9, wherein the liquid crystal elastomer has a glass transition temperature (T_{g}) of -10°C to -30°C.

15. The liquid crystal elastomer according to claim 9, wherein the liquid crystal elastomer has an isotropization temperature (Tᵢ) of 40°C to 70°C.

16. A liquid crystal elastomer fiber comprising a liquid crystal elastomer produced according to the method of claim 1.
